# EUROPÄISCHE PATENTSCHRIFT

(11) **EP 0 991 045 B1**
(45) Veröffentlichungstag und Bekanntmachung des Hinweises auf die Patenterteilung: **02.06.2004**
(21) Anmeldenummer: 99115107.7
(22) Anmeldetag: 09.08.1999
(51) Int. Cl.: G08G 1/16

(54) **Verfahren und Einrichtung zur Erfassung von Hindernissen**
Method and device to detect obstacles
Méthode et appareil de détection d'obstacles

(30) Priorität: 30.09.1998 DE 19845048
(43) Veröffentlichungstag der Anmeldung: 05.04.2000
(73) Patentinhaber: Volkswagen Aktiengesellschaft, 38436 Wolfsburg (DE)
(72) Erfinder: Kopischke, Stephan, 38442 Wolfsburg (DE)

(56) Entgegenhaltungen:
- EP-A- 0 825 454

## Beschreibung

Die Erfindung betrifft ein Verfahren zur Erfassung von Hindernissen gemäß Oberbegriff des Anspruchs 1 sowie eine Einrichtung zur Durchführung des Verfahrens.

Um in einer bevorstehenden Unfallsituation geeignete Maßnahmen zur Vermeidung eines Unfalls oder zur Minimierung von Unfallfolgen einleiten zu können, sind automatisch arbeitende Systeme für Kraftfahrzeuge vorgesehen, die eine Notbremsung oder ein Ausweichen vor einem Hindernis veranlassen können. Ein solches automatisch arbeitendes System verwendet Sensoren, die Objekte im Bereich der Fahrtrichtung erkennen, so daß das System prüfen kann, ob ein im Fahrtrichtungsbereich befindliches Objekt ein Hindernis mit Kollisionsgefahr darstellt. Das System kann dabei so arbeiten, daß durch Beeinflussung der Lenkung ein auf Kollisionskurs befindliches Hindernis selbsttätig umfahren wird. Erkennt das System, daß eine Kollision nicht mehr zu vermeiden ist, so kann eine Notbremsung ausgelöst werden, um die Unfallfolgen zu minimieren.

Aus der DE 38 30 790 A1 ist ein Verfahren zur automatischen Kollisionsvermeidung für automatisch führbare Fahrzeuge bekannt, mit dem die X-Y-Koordinaten von Hindernissen mittels Sensoren erfaßt werden. Wird bei einem solchen System ein Radar- oder Ultraschallsignal zur Erfassung der Hindernisse verwendet, so erhält man für jedes von den Sensoren erfaßte Objekt eine Vielzahl von Signalen, die bei der Weiterverarbeitung im System eine entsprechend große Datenmenge zur Folge haben.

Bei derartigen Systemen ist es besonders wichtig, daß die zu verarbeitenden Daten möglichst schnell verarbeitet werden, um in einer bevorstehenden Unfallsituation mit möglichst geringer Verzögerung die entsprechenden Maßnahmen zur Vermeidung eines Unfalls oder zur Minimierung von Unfallfolgen einleiten zu können. Je größer die zu verarbeitende Datenmenge ist, desto größer ist auch die Reaktionszeit des Systems.

Der Erfindung liegt die Aufgabe zugrunde, ein Verfahren zur Erfassung von im Fahrtrichtungsbereich eines Kraftfahrzeugs befindlichen Hindernissen zu schaffen, bei dem möglichst aussagekräftige Objektdaten von den erfaßten Objekten ausgewertet werden.

Die Lösung dieser Aufgabe erhält man mit den im Anspruch 1 angegebenen Merkmalen. Zu jedem von den Sensoren erfaßten Objekten werden der Mindestabstand und Objektkoordinaten, die die Koordinaten der beiden äußersten Endpunkte jedes Objekts betreffen, erfaßt. Dabei wird vorzugsweise auch der Objektpunkt, der den Mindestabstand des zugehörigen Objekts darstellt, in Form von Koordinaten erfaßt. Somit erhält man für jedes Objekt eine Dreipunktmessung in Form von Objektkoordinaten. Die Erfassung von den drei Meßpunkten zu jedem Objekt ergibt eine aussagekräftige Information, wobei gleichzeitig eine übermäßige Datenmenge vermieden wird. Die für jedes Objekt auf drei Meßpunkte begrenzten Daten können somit schnell ausgewertet werden, so daß im Falle einer festgestellten Unfallsituation entsprechend schnell geeignete Maßnahmen eingeleitet werden können, um noch rechtzeitig vor einem Hindernis ausweichen zu können oder um bei einer unvermeidlichen Unfallsituation die Unfallfolgen auf ein Minimum reduzieren zu können.

Um eine Verkehrssituation optimal erfassen zu können, ist es vorteilhaft, die Änderung der Objektkoordinaten und des Mindestabstands zur Ermittlung der Objektdynamik auszuwerten. Anhand der jeweiligen Objektdynamik kann im Bezug auf die Fahrlinie des eigenen Fahrzeugs eine frühzeitige Aussage über einen möglichen Kollisionskurs gemacht werden.

Außerdem kann aus den Sensorsignalen eine Materialbestimmung für jedes Objekt erfolgen. Auf diese Weise kann beispielsweise festgestellt werden, ob es sich bei dem erfaßten Objekt um ein Fahrzeug, einen Fußgänger oder beispielsweise um ein Gebäude handelt.

In Abhängigkeit von den Objektart kann dann eine geeignete Maßnahme zur Vermeidung eines Unfalls oder zur Minimierung von Unfallfolgen eingeleitet werden.

Der Erfindung liegt weiterhin die Aufgabe zugrunde, eine Einrichtung zur Durchführung des erfindungsgemäßen Verfahrens zu schaffen.

Die Lösung dieser Aufgabe erhält man mit den im Anspruch 6 aufgeführten Merkmalen. Die am Fahrzeug angebrachten Sensoren stehen mit einer Auswerteeinrichtung in Verbindung, die über eine Steuerung eine Beeinflussung der Fahrdynamik im Falle einer bevorstehenden Unfallsituation vornehmen kann. Dabei ermittelt die Auswerteeinrichtung aus den erhaltenen Sensorsignalen die Koordinaten des Mindestabstands und die äußeren Endkoordinaten mit dem größten Winkelabstand jedes erfaßten Objekts. Somit erfolgt eine deutliche Datenreduzierung bezüglich der von den Sensoren abgegebenen Sensorsignalen.

Als Sensoren werden vorzugsweise Radar- und/oder Ultraschallsensoren verwendet, da diese zur Erfassung von Objekten geeignete Sensorsignale liefern, die von der Auswerteeinrichtung zur Steuerung eines automatischen Bremssystems und/oder einer Lenkungssteuerung optimal ausgewertet werden können.

Die Erfindung wird nachfolgend anhand eines in der Zeichnung dargestellten Ausführungsbeispiels näher erläutert.

Es zeigen:
- Figur 1: das Prinzip der Erfassung der Objektkoordinaten an jeweils drei Punkten,
- Figur 2: die Fahrtrichtungsbeeinflussung eines Fahrzeugs bei einer unvermeidlichen Unfallsituation und
- Figur 3: ein Blockschaltbild der erfindungsgemäßen Einrichtung.

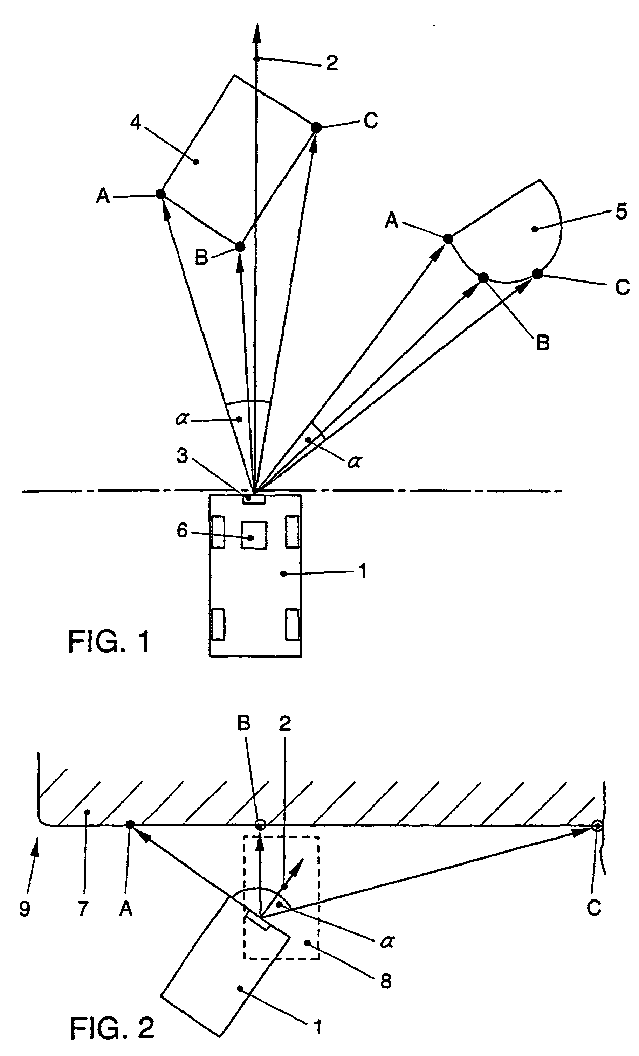

In Figur 1 ist ein in Draufsicht vereinfacht dargestelltes Fahrzeug 1 ersichtlich, welches sich entlang der Fahrtrichtung 2 bewegt. Am Fahrzeug 1 angebrachte Sensoren 3 erfassen die im Fahrtrichtungsbereich befindlichen Objekte 4, 5, wobei zur jedem Objekt 4, 5 die zu drei Objektpunkten A, B, C gehörenden Objektkoordinaten von einer im Fahrzeug 1 angeordneten Auswerteeinrichtung 6 ausgewertet werden. Die Koordinaten des Punktes B repräsentieren dabei den Mindestabstand zu dem jeweiligen Objekt 4 bzw. 5. Die Objektkoordinaten sind vorzugsweise Relativkoordinaten, deren Nullpunkt mit der Mittenposition der Sensoren übereinstimmt.

Bei der in Figur 1 dargestellten Verkehrssituation besteht die Möglichkeit, daß das Fahrzeug 1 zwischen den beiden Objekten 4, 5 hindurchfährt und somit einer Kollision vermieden wird.

Bei der in Figur 2 dargestellten Verkehrssituation kann das Fahrzeug 1 bei entsprechend hoher Geschwindigkeit dem in seiner Fahrtrichtung 2 stehenden Gebäude 7 nicht mehr ausweichen. Es liegt hier eine unvermeidbare Unfallsituation vor, weshalb Maßnahmen zur Minimierung der Unfallfolgen eingeleitet werden müssen. Im dargestellten Ausführungsbeispiel erfolgt eine geringfügige Drehung des Fahrzeugs 1 in die mit unterbrochenen Linien dargestellte Kollisionsposition 8, wobei gleichzeitig ein sofortige Notbremsung zur Verringerung der Aufprallgeschwindigkeit durchgeführt wird.

In Figur 2 kann der linke äußere Endpunkt 9 des Gebäudes 7 von den Sensoren 3 nicht erfaßt werden, weshalb hier als Punkt A der von den Sensoren 3 am weitesten links erfaßte Punkt A für die linken Endkoordinaten verwendet wird. Ebenso wie bei Figur 1 repräsentieren die Endkoordinaten mit dem größten Winkelabstand α die Endpunkte A und C.

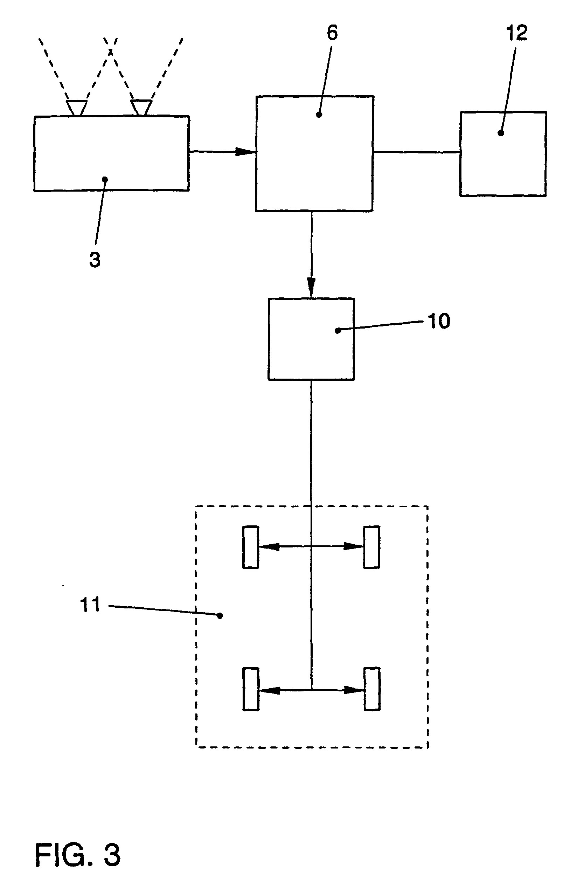

Die in Figur 3 dargestellte Einrichtung umfaßt Sensoren 3, eine Auswerteeinrichtung 6, eine Steuerung 10 sowie ein steuerbares Brems- und Lenksystem 11 eines Kraftfahrzeugs. Die Auswerteeinrichtung 6 ist außerdem noch mit einem Speicher 12 verbunden, der Grenzwertdaten oder andere Vergleichsdaten enthalten kann, anhand derer die Auswerteeinrichtung 6 eine Auswertung der von den Sensoren 3 ankommenden Signale vornehmen kann. Die Sensorsignale werden in der Auswerteeinrichtung 6 bezüglich jedes erfaßten Objekts im Hinblick auf eine erfaßte Unfallsituation ausgewertet, wobei aus den Sensorsignalen die Objektkoordinaten der Punkte A, B, C gemäß Figur 1 und Figur 2 extrahiert werden.

Stellt die Auswerteeinrichtung 6 eine Unfallsituation fest, so veranlaßt sie über die Steuerung 10 eine automatische Notbremsung und/oder eine Lenkungsbeeinflussung am Fahrzeug.

### BEZUGSZEICHENLISTE

- 1: Fahrzeug
- 2: Fahrtrichtung
- 3: Sensoren
- 4: Objekt
- 5: Objekt
- 6: Auswerteeinrichtung
- 7: Gebäude
- 8: Kollisionsposition
- 9: Endpunkt
- 10: Steuerung
- 11: Lenksystem
- 12: Speicher
- A,B,C: Objektpunkte

## Patentansprüche

1. Verfahren zur Erfassung von im Fahrtrichtungsbereich eines Kraftfahrzeugs befindlichen Hindernissen, bei dem mittels am Fahrzeug angebrachten Sensoren (3) Objektkoordinaten von im Sensorbereich befindlichen Objekten (4, 5) erfaßt und daraufhin untersucht werden, ob ein erfaßtes Objekt (4, 5) ein mögliches Hindernis darstellt, um gegebenenfalls Maßnahmen zur Kollisionsvermeidung oder zur Minimierung von Unfallfolgen einzuleiten, **dadurch gekennzeichnet, daß** zu jedem Objekt (4, 5) nur der Mindestabstand (8) und als Objektkoordinaten nur die Koordinaten der beiden seitlichen, äußersten Endpunkte (A, C) erfaßt werden.

2. Verfahren nach Anspruch 1, **dadurch gekennzeichnet, daß** als Objektkoordinaten auch die Koordinaten des Punktes (B), der den Mindestabstand zu einem Objekt (4, 5) repräsentiert, erfaßt werden.

3. Verfahren nach einem der Ansprüche 1 oder 2, **dadurch gekennzeichnet, daß** die Änderung der Objektkoordinaten und des Mindestabstands zur Ermittlung der Objektdynamik ausgewertet werden.

4. Verfahren nach einem der vorhergehenden Ansprüche, **dadurch gekennzeichnet, daß** aus den Sensorsignalen eine Materialbestimmung für jedes Objekt (4, 5) erfolgt.

5. Verfahren nach einem der vorhergehenden Ansprüche, **dadurch gekennzeichnet, daß** in Abhängigkeit von den ermittelten Objektdaten bei einer Hindemiserkennung geeignete Maßnahmen zur Auslösung einer Notbremsfunktion und/oder einer Fahrtrichtungsbeeinflussung erfolgen.

6. Einrichtung zur Durchführung des Verfahrens nach einem der vorhergehenden Ansprüche, die an einem Fahrzeug angeordnete, mit einer Auswerteeinrichtung (6) in Verbindung stehenden Sensoren (3) hat, wobei die Auswerteeinrichtung (6) in Verbindung mit einer Steuerung (10) eine Beeinflussung der Fahrdynamik im Falle einer bevorstehenden Unfallsituation vornimmt, **dadurch gekennzeichnet, daß** die Auswerteeinrichtung (6) aus den erhaltenen Sensorsignalen die Koordinaten des Mindestabstands und die äußeren Endkoordinaten mit dem größten Winkelabstand (α) jedes erfaßten Objekts (4, 5) extrahiert und zur Objektbestimmung auswertet.

7. Einrichtung nach Anspruch 6, **dadurch gekennzeichnet, daß** die Sensoren (3) Radar- und/oder Ultraschallsensoren sind.

8. Einrichtung nach einem der Ansprüche 6 oder 7, **dadurch gekennzeichnet, daß** die Steuerung (10) ausgangsseitig mit einem automatischen Bremssystem und/oder einer Lenkungsteuerung verbunden ist.

## Claims

1. Method for detection of obstructions which are located in the area of the direction of travel of a motor vehicle, in which object coordinates of objects (4, 5) which are located in the sensor area are detected by means of sensors (3) which are fitted to the vehicle, and are investigated to determine whether a detected object (4, 5) represents a possible obstruction, in order to initiate measures, if required, for collision avoidance or in order to minimize accident consequences, **characterized in that** only the minimum distance (8) for each object (4, 5) and, as object coordinates, only the coordinates of the two lateral outermost end points (A, C) are detected.

2. Method according to Claim 1, **characterized in that** the coordinates of the point (B) which represents the minimum distance to an object (4, 5) are also detected as object coordinates.

3. Method according to one of Claims 1 or 2, **characterized in that** the change in the object coordinates and the change in the minimum distance are evaluated in order to determine the object dynamics.

4. Method according to one of the preceding claims, **characterized in that** a material determination for each object (4, 5) is made from the sensor signals.

5. Method according to one of the preceding claims, **characterized in that** suitable measures for initiating an emergency braking function and/or for influencing the direction of travel are carried out as a function of the determined object data when an obstruction is identified.

6. Device for carrying out the method according to one of the preceding claims, which has sensors (3) which are arranged on a vehicle and are connected to an evaluation device (6), with the evaluation device (6) in conjunction with the controller (10) influencing the vehicle dynamics in the event of an impending accident situation, **characterized in that** the evaluation device (6) extracts the coordinates of the minimum distance and the outer end coordinates with the greatest angular interval (α) for each detected objected (4, 5) from the sensor signals which are obtained, and evaluates them for object determination.

7. Device according to Claim 6, **characterized in that** the sensors (3) are radar and/or ultrasound sensors.

8. Device according to one of Claims 6 or 7, **characterized in that** the controller (10) is connected on the output side to an automatic braking system and/or to a steering controller.

## Revendications

1. Méthode de détection d'obstacles qui se trouvent dans la zone du sens de déplacement d'un véhicule automobile, avec laquelle sont détectées, à l'aide de capteurs (3) montés sur le véhicule, des coordonnées d'objets (4, 5) qui se trouvent dans la zone de détection puis sont analysées pour vérifier si un objet (4, 5) détecté représente un obstacle possible afin d'engager d'éventuelles mesures destinées à éviter une collision ou pour minimiser les conséquences d'un accident, **caractérisée en ce que** pour chaque objet (4, 5), seuls sont détectés l'écart minimum (8) et comme coordonnées d'objet seules les coordonnées des deux points d'extrémité latéraux les plus à l'extérieur (A, C).

2. Méthode selon la revendication 1, **caractérisée en ce que** les coordonnées du point (B), lequel représente l'écart minimum par rapport à un objet (4, 5), sont également détectées en tant que coordonnées d'objet.

3. Méthode selon l'une des revendications 1 ou 2, **caractérisée en ce que** la modification des coordonnées de l'objet et de l'écart minimum est évaluée pour déterminer la dynamique de l'objet.

4. Méthode selon l'une des revendications précédentes, **caractérisée en ce qu'**une détermination du matériau de chaque objet (4, 5) est effectuée à partir des signaux de détection.

5. Méthode selon l'une des revendications précédentes, **caractérisée en ce qu'**en fonction des données d'objet déterminées, des mesures appropriées sont prises pour déclencher une fonction de freinage d'urgence et/ou d'influence du sens de déplacement en cas de détection d'un obstacle.

6. Appareil destiné à mettre en oeuvre la méthode selon l'une des revendications précédentes, lequel comporte des capteurs (3) disposés sur un véhicule en liaison avec un dispositif d'analyse (6), le dispositif d'analyse (6), en combinaison avec une commande (10), exerçant une influence sur la dynamique de conduite dans le cas de la présence d'une situation d'accident, **caractérisé en ce que** le dispositif d'analyse (6) extrait des signaux de détection reçus les coordonnées de l'écart minimum et les coordonnées d'extrémité extérieures avec le plus grand écart angulaire (α) de chaque objet détecté (4, 5) et les analyse en vue de déterminer l'objet.

7. Appareil selon la revendication 6, **caractérisé en ce que** les capteurs (3) sont des capteurs à radar et/ou à ultrasons.

8. Appareil selon l'une des revendications 6 ou 7, **caractérisé en ce que** la commande (10) est reliée du côté de la sortie avec un système de freinage automatique et/ou une commande de direction.
